# EUROPEAN PATENT APPLICATION

(11) **EP 3 300 285 A1**
(43) Date of publication of application: **28.03.2018**
(21) Application number: 16306226.8
(22) Date of filing: 23.09.2016
(51) Int. Cl.: H04L 5/00, H04W 52/00, H04W 72/00, H04W 72/14, H04W 52/02

(54) **METHODES AND APPARATUS TO OPERATE A TWO STEP DOWNLINK CONTROL INFORMATION**

(71) Applicant: ALCATEL LUCENT, 92100 Boulogne-Billancourt (FR)
(72) Inventor: Doll, Mark, 70435 Stuttgart (DE); Bakker, Hajo, 70435 Stuttgart (DE); Cesar, Bozo, 70435 Stuttgart (DE); Saur, Stephan, 70435 Stuttgart (DE); Schaich, Frank, 70435 Stuttgart (DE); Wild, Thorsten, 70435 Stuttgart (DE)
(74) Representative: DREISS Patentanwälte PartG mbB

(57) **Abstract**

It is proposed a radio telecommunications signal (2) to transmit downlink control signaling information (DCI) specific to a user equipment (UE) from a network node (BS) to the user equipment (UE) according to an encoding scheme based on time and frequency radio resources, the signal (2) comprising: an identification signal (IS) comprising a pilot sequence (PS) specific to at least one user equipment (UE), a first control signal (CS1) comprising an information (SI2) indicative of a size (S2) of a second control signal (CS2), wherein a size (S1) of the first control signal (CS1) is predetermined; and the second control signal (CS2) comprising at least partly the downlink control signaling information (DCI).

## Description

### Field of the invention

The present description relates to a network node to operate in a radio telecommunications network, a method to operate a network node in a radio telecommunications network, a user equipment to operate in a radio telecommunications network, a method to operate a user equipment in a radio telecommunications network, and a radio telecommunications signal.

### Background

The upcoming "Internet of Things" increases the so called machine-type communication with an associated traffic volume. Moreover, with increasing numbers of active mobile users in a cell, scalability of the radio access system of LTE is limited. Also, a battery capacity of the machine-type devices is limited.

In 4G/3GPP LTE, downlink control channels employ blind decoding. Blind decoding requires a small set of a-priori known locations (so called search space) and an priori known size of control information (downlink control information (DCI) size in net bits, i.e. without forward error correction (FEC) overhead) to limit the number of blind decoding attempts per transmission time interval (TTI), i.e. per subframe in case of LTE.

### Summary

According to an aspect it is proposed a network node being configured to: determine the downlink control signaling information; determine a pilot sequence specific to at least one user equipment; determine an information indicative of a size of a second control signal. The network node transmits a radio telecommunications signal which comprises: an identification signal comprising the determined pilot sequence; a first control signal comprising the information indicative of the size of the second control signal, wherein a size of the first control signal is pre-determined; and the second control signal comprising at least partly the downlink control signaling information.

According to a further aspect a user equipment is proposed which is configured to: receive a radio telecommunications signal. The radio telecommunications signal comprises: an identification signal comprising a pilot sequence; a first control signal comprising an information indicative of a size of the second control signal, wherein a size of the first control signal is predetermined; and the second control signal comprises at least partly the downlink control signaling information.

The user equipment determines that the received pilot sequence is specific to the user equipment, decodes the first control signal in dependence on the predetermined size of the first control signal, determines the information indicative of the size of the second control signal from the decoded first control signal, decodes the second control signal in dependence on the determined size of the second control signal, and determines the downlink control signaling information from at least the decoded second control signal.

Advantageously, the proposed network node, the proposed user equipment and the respective methods increase flexibility when transmitting downlink control signaling information. As the pilot sequence immediately enables the user equipment to identify that the downlink control signaling information is intended for it, a demodulation and decoding effort regarding the downlink control signaling information is drastically reduced, as effort beyond demodulating and decoding the pilot sequence is advantageously omitted for other user equipments which have a different pilot sequence. Furthermore as no limitations regarding control search space exists and no restrictions in user data allocation are present, full scheduling flexibility is achieved for the transmission of downlink control signaling information. Consequently, scheduling constraints are removed and enable also a coexistence with other services in a multi-service air interface. Moreover, forward compatibility with future standards is achieved by this way in conjunction with waveforms like UF-OFDM.

As the size of the first control signal can be drastically reduced the effort of blind decoding is also reduced. Search space locations for different user equipments preferably fully overlap, but they are not restricted, i.e. unless there are no free radio resources a UE remains schedulable. Also trade-offs regarding flexibility, control overhead and the amount of user data scheduled do not exist anymore with the proposed radio telecommunications signal.

An advantageous embodiment is characterized in that the identification signal represents a first demodulation reference sequence for demodulation of the first control signal, wherein the radio telecommunications signal further comprises a second demodulation reference sequence for demodulation of the second control signal and for demodulation of user data if user data is present. As different demodulation reference sequences are used for the first control signal and the second control signal different spatial multiplexing techniques can be used.

An advantageous embodiment is characterized in that the information indicating a size depends on the size of user data being transmitted. Consequently, the amount of downlink control signaling information can be adapted to the present load of a respective downlink channel transmitting user data in the sense of amount of scheduled user data.

An advantageous embodiment is characterized in that the first control signal comprises: a radio resource allocation of the second control signal and a modulation and coding scheme information of the second control signal. A further degree of freedom regarding the transmission of the second control signal is established and the modulation and coding of the second control signal and the first control signal may differ.

An advantageous embodiment is characterized in that the downlink control signaling information comprises an uplink grant decision information for a transmission of uplink data in an uplink radio resource.

An advantageous embodiment is characterized in that the downlink control signaling information comprises an assignment information for user data, the assignment information comprising at least a location information and an information indicative of a size of user data.

An advantageous embodiment is characterized in that the first and/or second control signal comprises a cyclic redundancy check information of the downlink control signaling information. As the cyclically redundancy check information is determined in dependence on the contents of the first and/or second control signals, the decision, whether the first and second control signals are received correctly, is postponed until the result of the cyclically redundancy check. In an embodiment the CRC-field is arranged at the end of the second control signal.

### Brief description of the figures

- Figure 1a, 1b and 3: show a schematic structure of a radio telecommunications signal, respectively;
- Figure 2: shows schematic radio communications network;
- Figure 4: shows a plurality of aggregation levels for a first control signal
- Figure 5: shows a plurality of aggregation levels for a second control signal;
- Figure 6: shows a schematic time frequency grid with embodiments of transmitting downlink control signaling information;
- Figures 7a, 7b: show a schematic sequence diagram for operating a network node, respectively; and
- Figure 8a, 8b: show a schematic sequence diagram for operating a user equipment, respectively.

### Description of the embodiments

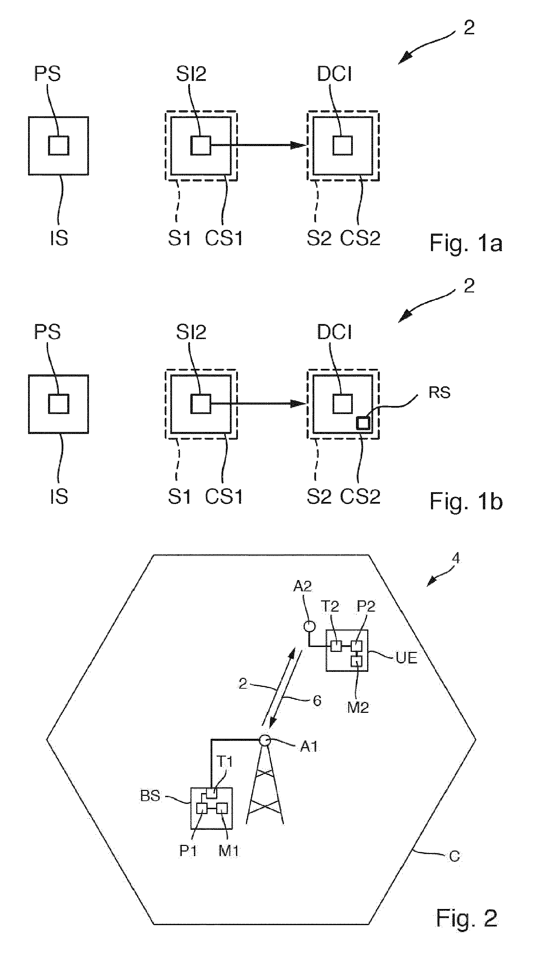

Figure 1a shows a schematic structure of the radio telecommunications signal 2 to transmit downlink control signaling information DCI specific to a user equipment from a network node to the user equipment according to an encoding scheme based on time and frequency resources. The radio telecommunications signal 2 comprises an identification signal IS, a first control signal CS1 and second control signal CS2. The identification signal IS comprises a pilot sequence PS which is determined and transmitted implicitly or explicitly to the respective user equipment UE. The pilot sequence is determined to be specific to the user equipment UE or to a group of user equipments UEs. A size S1 of the first control signal CS1 is predetermined. The first control signal CS1 comprises an information SI2 which indicates a size S2 of the second control signal CS2. The second control signal CS2 comprises at least a part of the downlink control signaling information DCI. However, according to an embodiment also the first control signal CS1 comprises a part of the downlink control signaling information DCI.

Figure 1b shows a schematic structure of the radio telecommunications signal 2, wherein the second control signal CS2 shares its time-frequency location in the sense of a resource block RB with a demodulation reference sequence RS.

Figure 2 shows schematic radio communications network 4 comprising the network node BS and the user equipment UE. The network node BS comprises a memory M1, a processor P1, and a radio transceiver T1. The network node BS can be also termed eNodeB, base station or the like. The network node BS is connected to a stationary antenna A1 to transmit the downlink radio telecommunications signal 2 and/or to receive an uplink radio telecommunications signal 6. The antenna A1 may comprise a plurality of antennas. The antenna A1 can be a remote radio head or the like. The network node BS and the antenna A1 provides a radio coverage according to a cell C.

The user equipment UE resides within the cell C and is able to receive the downlink radio telecommunications signal 2 from the network node BS and is able to transmit the uplink radio telecommunications signal 6 to the network node BS. The user equipment UE comprises a memory M2, a processor P2, a radio transceiver T2, and an antenna A2. The user equipment UE is a mobile radio terminal or a machine-type radio terminal.

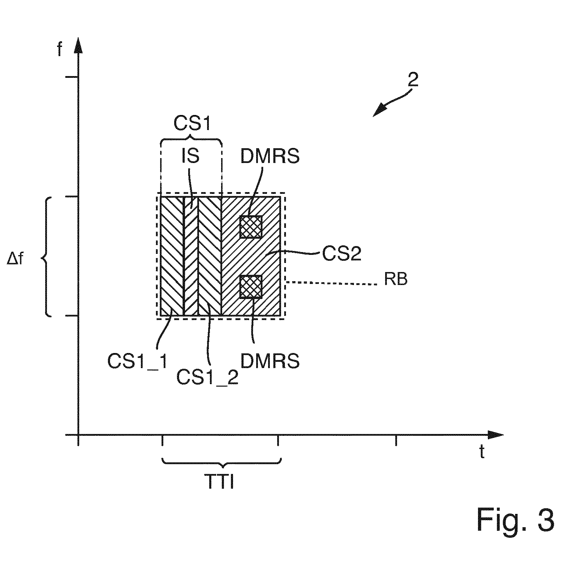

Figure 3 shows a schematic structure of the radio telecommunications signal 2 on a time frequency grid. The radio telecommunications signal 2 is transmitted within a resource block RB which spans a plurality of subcarriers Δf in frequency domain and a transmission time interval TTI in time domain. The resource blocks RBs may be made up of twelve subcarriers in frequency domain multiplied by seven symbols in time domain resulting in 84 resource elements, respectively, wherein each resource element is made up of one subcarrier in frequency domain and one symbol in time domain. Another configuration of resource blocks RBs with a different number of resource elements is possible as well, e.g. 12 subcarriers in frequency domain and 6 symbols in time domain as implemented in Long Term Evolution (LTE) if a long cyclic prefix (CP) is used.

The identification signal IS is expected to be transmitted within a search space for the UE, wherein the search space is defined as an a-priori known set of time frequency locations in the time-frequency grid, wherein the respective time-frequency location comprises a plurality of resource elements. The fixed size of the identification signal IS is known a-priori. In an embodiment, the search space for the identification signal IS is limited to one resource block or a plurality of resource blocks and the size of the identification signal IS is known a-priori.

The first control signal CS1 is separated in two parts CS1_1 and CS1_2. The locations of the first control signal CS1 relative to the identification signal IS can be a-priori known. As the preamble sequence PS is transported within the identification signal IS, the preamble sequence PS shall be used also as the first demodulation reference sequence for CS1. Therefore the resource elements REs of the identification signal IS are preferably located close to the resource elements REs of the first control signal CS1, preferably within the same resource block RB.

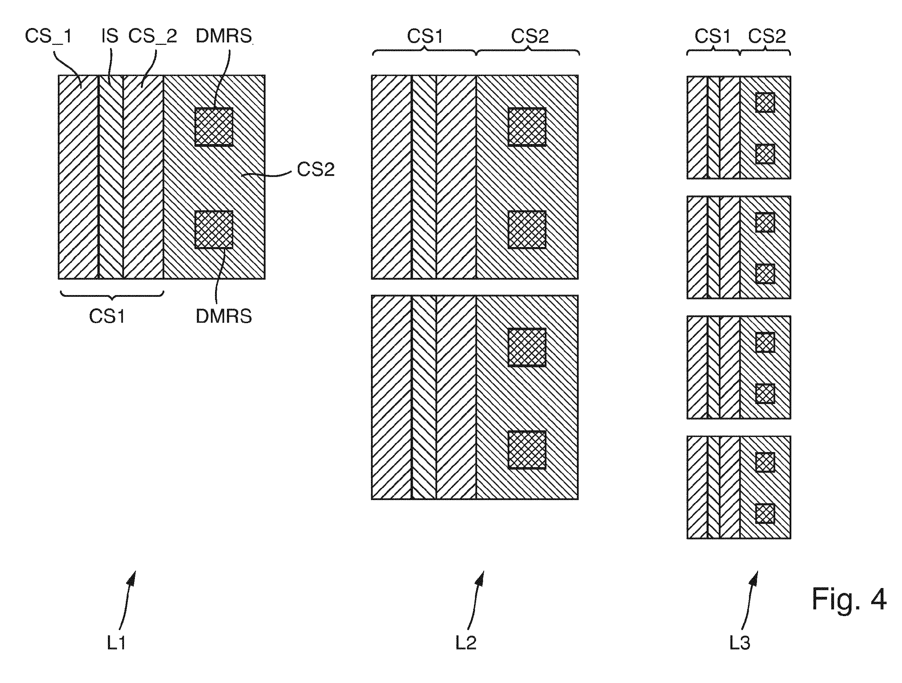

Also the fixed size S1 of the first control signal CS1 and the modulation and coding scheme can be known a-priori. The first control signal CS1 comprises information SI2 indicating a size S2 of the second control signal CS2 therefore allowing a variable size of the second control signal CS2 according to a present amount of downlink control information DCI to be transmitted to the user equipment UE. The time-frequency location of the second control signal CS2 relative to the first control signal CS1 in the sense of a start of the second control signal CS2 is known a-priori by pre-configuration/definition or may be derived from further allocation information within the first control signal CS1. Size, allocated resource block RBs, modulation and coding scheme of the second control information CS2 may depend on the chosen aggregation level for the first control signal CS1, which is further explained in figure 4.

The determined pilot sequence PS being transmitted via the identification signal IS is used at the user equipment UE as a first demodulation reference sequence for demodulation of the first control signal CS1. The radio telecommunications signal 2 comprises the demodulation reference sequence RS which is transported in the symbols of the demodulation reference signals DMRS. The second demodulation reference sequence RS can be a Zhadoff-Chu-sequence, a Gold-sequence or the like and serves at the reception side, namely the user equipment UE, for demodulation of the second control signal CS2.

Table 1 comprises an example of downlink control signaling information DCI to exemplify the ideas outlined in this description, the downlink control signaling information DCI representing a logical single block of information transmitted via the first control signal CS1 and the second control signal CS2. The first control signal may have a fixed FEC block size of 48 bits. It is assumed that a scheduler of the network node BS chooses, based on the latest radio channel measurement report from the user equipment UE received via the uplink signal 6, a QCI, Channel quality indicator, index 4 (QPSK code rate 0.3) and aggregation level a=1, which translates into a FEC block size in the sense of the size S2 of floor (76 RE * 2 bit/RE * 0.3) = 45 bit. Finally, aggregation level for the first control signal CS1 is level 1 (allocating 1 RB) and the user data allocation size may be n=10 RBs within a total downlink carrier bandwidth of 100 RBs (20 MHz). Accordingly, c1 has size zero, i.e. is not present, since in case of aggregation level 1 for the second control signal CS2, there is no further RB for the second control signal CS2. The field c2 indicates the location of user data RBs and has size ceil (log2((100-1) over 10)) = 44 bit with (n over k) = n! / (k!(n-k)!).

The downlink control signaling information DCI according to lines 1 to 11 of table 1 is divided between the first control signal CS1 and the second control signal CS2 according to the following scheme: The first fields a, c1, m, CRC and n have a total size of 2+0+4+16+7=29 bit and are completely mapped to first control signal CS1. The remaining 19 bit of the first control signal CS1 contain the first 19 bits of field c2 (the most significant ones in case of MSB first mapping), and the remaining 44-19=25 bits of c2 are mapped to the start of the second control signal CS2, followed by the remaining 24 bit of the downlink control signaling information DCI with all further fields, according to lines 7 to 11 of table 1. This leaves 21 bit within the second control signal CS2 that are then filled with the start of user data, i.e. the start of the MAC PDU (medium access control protocol data unit), typically the MAC header. Therefore, the first part of the downlink control signaling information DCI resides in the first control signal CS1 and the second part of the downlink control signaling information DCI resides in the second control signal CS2. Of course, other mapping schemes are also possible to establish the transmission of downlink control signaling information DCI.

Although only few first bits of the MAC PDU are mapped to the second control signal CS2, those may contain MAC subheaders and control elements with important control information, e.g. timing advance or secondary cell activation/deactivation, and may therefore benefit from the lower block error rate (BLER) of control (typ. <1 %) compared to user data (typ. 10 % to 30 % initial BLER target) and are therefore received with lower delay without further HARQ (hybrid automatic repeat request) retransmissions.

The first control signal CS1 comprises a radio resource allocation of the second control signal CS2 and the modulation encoding scheme, MCS, information m to demodulate and decode the second control signal CS2 at the side of the user equipment UE. The MCS can be determined according to 3GPP TS 36.213 table 7.2.3-1, which is incorporated herein by reference.

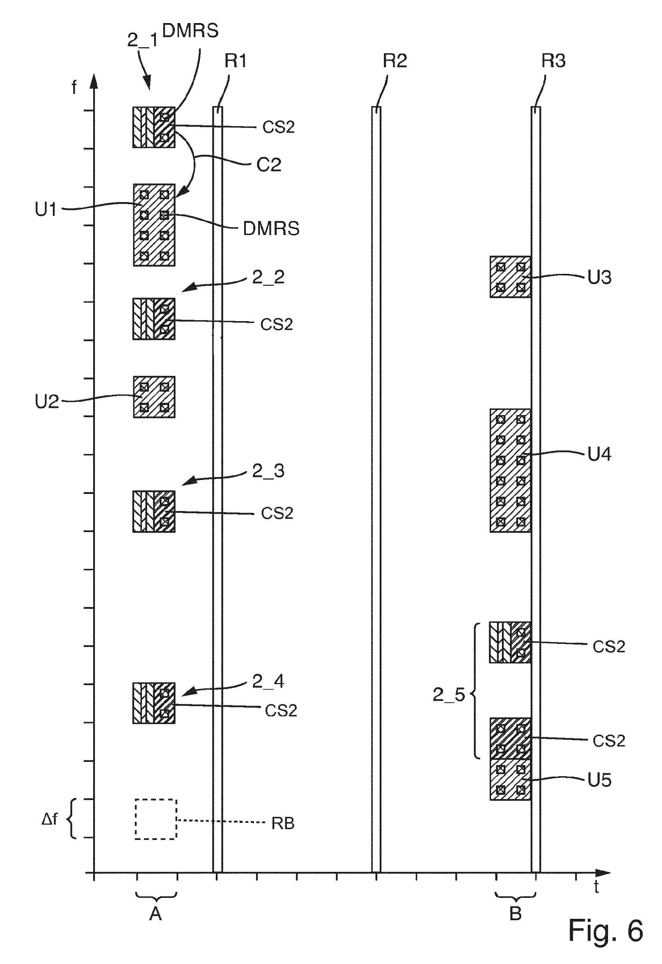

The network node BS pre-configures the user equipment UE previous to the methods referred to in this description. For example, an ID signal length/size (e.g. 12, 24, 28 resource elements) and signal form (frequency localized or frequency diverse comb structure), CS1 aggregation level, etc. The frequency localized structure applies when frequency dependent CSI, channel-state information, for this UE is available. In this case the downlink control signaling information DCI will be transmitted to the user equipment UE in the "best" RBs for this UE. If only wideband CSI is available for this UE, DCI will be transmitted in several RBs distributed over the frequency band (in a predefined comb structure, i.e. with a predefined spacing: see example figure 6, A). The user equipment UE is therefore able to search for the identification signal IS and the first control signal CS1 within the pre-configured search space. In a preferred embodiment the search space comprises one single location per resource block RB in the in the sense of a pre-defined symbol number inside a resource block RB.

According to an embodiment of the pre-configuration the network node BS determines and explicitly transmits the UE-specific or UE-group-specific pilot sequences PS to the respective user equipments UEs via a pre-configuration channel.

According to a further embodiment of the pre-configuration the network node BS determines in a first step an identifier, for example an RNTI, Radio Network Temporary Identifier, and explicitly transmits the identifier via the pre-configuration channel to the user equipment UE. Depending on the identifier, both the network node BS and the user equipment UE determine the pilot sequence PS so that the user equipment UE is able to determine whether the received first control signal CS1 is intended for it. The function to determine the pilot sequence PS is preferably a one-to-one function. An example for the function is a Gold-sequence generator which determines a Gold-sequence in dependence on the RNTI, a system frame number, SFN, and a subframe number. The Gold-sequence is preferably initialized at the start of each subframe with the RNTI, SFN and subframe number. The pilot sequence is determined to be a subsequence of the determined Gold-sequence. For example the pilot sequence PS is a subsequence with a size of 24 bits. The pilot sequence PS is mapped by the network node BS to the resource elements of the search space of the identification signal IS, preferably in order of increasing subcarrier frequency. Therefore, both sides determine at the start of each subframe a respective pilot sequence PS and have knowledge of this same pilot sequence PS which is specific to the user equipment UE.

**Table 1**

| | Downlink Control Signaling Information | Possibl e sizes and dependency | Bandwidth [MHz] | | | |
|---|---|---|---|---|---|---|
| | | | 5 (N=25 RBs/ subframe) | 10 (N=50 RBs/ subframe) | 20 (N=100 RBs/ subframe) | |
| | Control Information | Size [bit] | | | | |
| | Total size | | 56...81 | 58...110 | 60...164 | |
| 1 | a: aggregation level of the second control signal CS2 | 2 | 2 | 2 | 2 | |
| 2 | c1: combinatorial index resource block assignment of the second control signal CS2 | f (N, a) | 0, 5, 11 | 0,6,15 | 0,7,18 | |
| 3 | m: MCS, modulation and coding scheme , for the second control signal CS2, present if a>0 | 0 or 4 | 4 | 4 | 4 | |
| 4 | CRC: cyclic redundancy check value for lines 1 to 3 and lines 5 to 11, carries RNTI, radio network temporary identifier, added mod 2 | 16 | 16 | 16 | 16 | |
| 5 | n: number RB, resource blocks, allocated for user data (in addition to the second control signal CS2) | f (N, a) | 5 | 6 | 7 | |
| 6 | c2: combinatorial index resource block assignment of user data, present if n>0 | f (N, a, n ) | 0...22 | 0...46 | 0...96 | |
| 7 | TPC, transmit power control, command for PUCCH, physical uplink control channel | 2 | 2 | 2 | 2 | |
| 8 | HARQ, hybrid automatic repeat request, process number | 3 | 3 | 3 | 3 | |
| 9 | Antenna port(s), scrambling identity and number of layers | 3 | 3 | 3 | 3 | |
| 10 | Transport Block 1 MCS+NDI+RV (NDI: new data indicated; RV: redundancy version) | 5+1+2 | 8 | 8 | 8 | |
| 11 | Transport Block 2 MCS+NDI+RV | 5+1+2 | 8 | 8 | 8 | |

The fields a and c1 in table 1 represent the radio resource assignment information for the second control signal CS2. The field m in conjunction with aforementioned radio resource allocation represents the size S2 of the second control signal CS2. The fields n and c2 in table 1 represent assignment information for user data. The following fields 7 to 11 exemplify how the downlink control information DCI may be completed according to the DCI format 2C as defined for 3GPP LTE. Of course, other embodiments are possible due to the flexibility of the proposed DCI scheme.

According to a further embodiment of the downlink control signaling information DCI comprises an uplink grant decision information for a transmission of uplink data in an uplink radio resource in response to the reception of the downlink control signaling information DCI by the user equipment UE.

If the time-frequency location of the first control signal CS1 relative to the identification signal IS and the location of the second control signal CS2 relative to the first control signal CS1 are known a-priori, a further signaling overhead is omitted. The first control signal CS1 is located in the first half of the respective resource block RB. The second control signal CS2 is located in the second half of the same resource block RB. If the downlink control signaling information DCI does not fit in the second half of the RB, additional RBs for the second control information CS2 are used - then further allocation information for the second control information CS2 may be provided in the first control information CS1 . However, if the second control information CS2 has a predetermined allocation relative to the first control information CS1, for example adjacent to the first control information CS1, then the allocation information for the second control information CS2 can be omitted in the first control information CS1.

According to an embodiment the first control signal CS1 may only comprise a single information indicative of the size of the second control signal CS2, namely the aggregation level a of the second control signal CS2 only. Therefore, c1 and m are omitted.

According to an embodiment the first control signal CS1 comprises indications regarding the size, location and modulation of the second control signal CS2. The first control signal CS1 is transmitted as a single layer only, which means that the first control signal CS1 is transmitted without being spatially multiplexed. The second control signal CS2 may be multi-layer itself or being mapped on to one of multiple layers used for user data. Throughout this description the term layer is used with respect to layer mapping. Modulation symbols are assigned to one or more layers depending on the transmission scheme. The number of layers for the transmission scheme is signaled by the user equipment UE by means of a rank indicator, RI, feedback.

Figure 4 shows a plurality of aggregation levels L1, L2 and L3 for the first control signal CS1 for a frequency diverse scheduling. For the aggregation levels L1 to L3 a single one, 2 or 4 resource blocks RBs are used, respectively. Therefore the aggregation level for the first control signal CS1 defines the number of resource blocks RB used for the transmission of the first control signal CS1. A higher aggregation level means that the downlink control signaling information DCI is coded more robust - more resource elements REs are used to transport the bits of the downlink control signaling information DCI. Of course, how many resource elements REs are used for which aggregation level can be defined different as outlined in this example. The aggregation levels L1 to L3 for the first control signal CS1 are shown for a first aggregation level of the second control signal CS2. As exemplified, the first control signal CS1 transmits 48 bits by means of 72 resource elements and is transmitted via a single layer, which means no spatial multiplexing, and a QPSK, Quadrature phase-shift keying, code rate of 1/3. The aggregation levels L1 to L3 for the first control signal CS1 used for transmission of the downlink control signaling information DCI are known a-priori. The used aggregation level is determined by the network node BS.

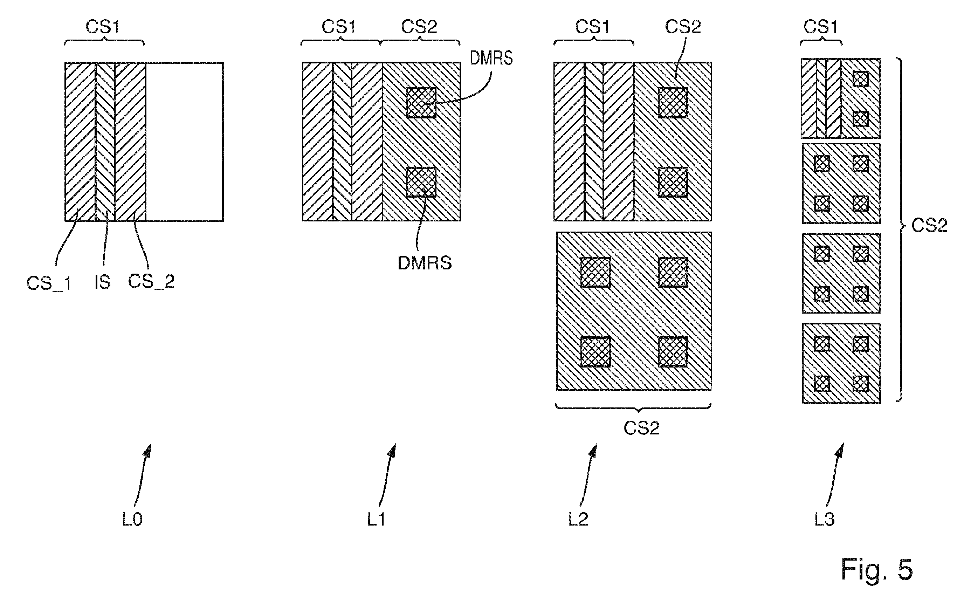

If the first control signal CS1 is transmitted in one half of the resource block RB: seven symbols x twelve subcarriers = 84 resource elements are used. Minus 12 resource elements REs for the identification signal IS, remain 72 resource elements REs for the first control signal CS1. Using QPSK, 72*2 = 144 bits can be transported. In the first control signal CS1 only 48 bits are transported by definition, i.e. 48/144 = 1/3 is the code rate used to transport the first control signal CS1 at the aggregation level L1 in figure 4 or figure 5.

Figure 5 shows a plurality of aggregation levels L0, L1, L2 and L3 for the second control signal CS2 for a frequency selective scheduling. For the aggregation levels L0 to L3 zero, a half, 1.5 and 3.5 resource blocks are used (including the second demodulation reference sequence transmitted via the demodulation reference signal DMRS). Each resource block RB for solely the transport of the second control signal CS2 and/or user data comprises four demodulation reference signals DMRS. Therefore the aggregation level for the second control signal CS2 defines the size of the second control signal CS2. The second control signal CS2 consists according to the respective aggregation level L0 to L3 of 0/76/228/532 resource elements REs. Each resource block RB for solely the second control signal CS2 comprises four demodulation reference signals DMRSs. This results in:
- L1: 0.5 RB: 7x12 REs - 2x4 REs for DMRS = 76 REs remaining for CS2 bits;
- L2: 1.5 RB: 76*3 = 228 REs remaining for CS2 bits;
- L3: 3.5 RB: 76*7 = 532 REs remaining for CS2 bits; and
- L0: no CS2 is available: for a very short DCI.

For the aggregation level L3 alternatively also 2.5 resource blocks RBs can be used. The aggregation levels of figure 4 and figure 5 can be freely combined. The respective one of the aggregation levels L0 to L3 used for the second control signal CS2 for transmission of the downlink control signaling information DCI is known a-priori or is determined by the network node BS. The chosen aggregation level L0 to L3 determines a maximum size for the second control signal CS2 and therefore also a maximum size for the downlink control signaling information DCI. The aggregation level L0 can be chosen when only small or no amounts of user data allocations are necessary and therefore the size of the downlink control signaling information DCI is small.

Figure 6 shows a schematic time frequency grid with two embodiments of transmitting downlink control signaling information DCI together with user data of variable location, size and coding as signaled by the second control signal CS2. According to a first embodiment A frequency diverse scheduling is applied, e.g. when only wideband SINR, signal-to-interference plus noise ratio) is available at the network node BS. According to a second embodiment B frequency selective scheduling is applied when full CSIT, channel state information is available at the network node BS. Channel state information-reference signals CSI-RS are interspersed in time at locations R1, R2 and R3.

According to the first embodiment a respective downlink control signaling information DCI is transmitted to a single user equipment UE. Aggregation level L3 is used for the first control signal CS1, i.e. four resource blocks are used for the first control signals CS1. Aggregation level L1 is used for the second control signal CS2, i.e. only the resource blocks adjacent to CS1 are allocated for the second control signal CS2. The field C2 of the second control signal CS2 indicates the size and the location of the user data U1, particularly two resource blocks. Only one data pair n (size) and c2 (location) in the sense of field C2 indicates the number and the position of the RBs for user data U. As the coded control information for the second control signal CS2 is distributed over the allocated four resource blocks RBs, the coded bits for n and c2 are distributed over the four allocated RBs and are not present in one RB only. As the coded control information is distributed over the allocated resource blocks RB, for the first and second control signals CS1, CS2 more robust coding in the sense of incremental redundancy is achieved. The second demodulation reference sequence is shared between the second control signal CS2 and user data U.

The position in time and frequency of the first resource block RB for the transmission of the first control signal CS1 is arbitrary. However, the number and position of the next resource block RB for the transmission of following signal 2_2 is defined by the aggregation level of the first control signal CS1 (comb structure with different spacing and length). In the example a spacing of five resource blocks RB is used between the allocated resource blocks RB.

According to an embodiment the same preamble sequence PS is transmitted in the identification signal IS of the resource blocks with positions 2_1, 2_2, 2_3 and 2_4.

According to an alternative embodiment the preamble sequence PS is mapped from the lowest to the highest resource block at positions 2_1, 2_2, 2_3 and 2_4 within the set of identification signals IS.

According to the second embodiment B respective downlink control signaling information DCI is transmitted to a single user equipment UE. Aggregation level L1 is used for the first control signal CS1. Aggregation level L2 is used for the second control signal CS2. The signal 2_5 comprises the downlink control signaling information DCI with an information indicating the location and/or the size of user data U3, U4, U5 intended for reception at the single user equipment UE.

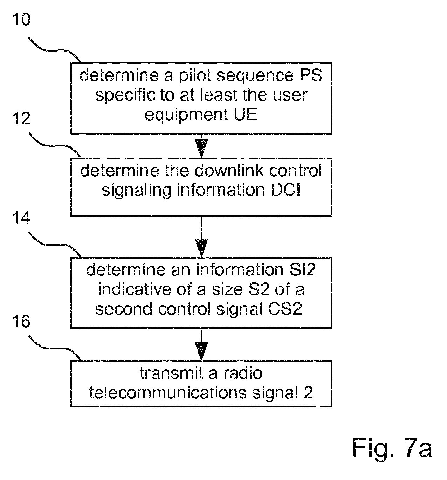

Figure 7a shows a schematic sequence diagram for operating the network node BS of figure 2. According to the step 10 it is determined the pilot sequence PS by means of a one-to-one function. For example, the pilot sequence PS is a Gold-sequence, e.g. a pseudo-random sequence generated as defined in 3GPP TS 36.211 section 7.2 "Pseudo-random sequence generation", which is incorporated herein by reference, or a subsequence of the Gold-sequence as outlined above. The pilot sequence PS is explicitly or implicitly signaled to the user equipment UE. The determined pilot sequence PS is precoded for the respective user equipment UE. The sequence length can be chosen by the network node BS in dependence on an estimated and/or reported SINR to achieve a low missed detection rate, typically below 1%.

According to a step 12 the downlink control signaling information DCI is determined.

According to a step 14 information SI2 indicating the size S2 of the second control signal CS2 is determined in dependence on the amount of downlink control signaling information DCI, the amount of downlink control signaling information DCI for example depending on the amount of user data to be transmitted to the respective user equipment UE. The determined size S2 is determined in dependence on and scales with the amount of user data, the complexity of its allocation in the sense of used number of resource blocks, used layers, used transport block, an active HARQ process etc.

The first control signal CS1 may also comprise a location in frequency and/or time in units of resource blocks of the second control signal CS2. The modulation and coding scheme MCS for the second control signal CS2 and the layer(s) the second control signal CS2 is mapped onto may be also integral part of the first control signal CS1. The information fields of the downlink control signaling information DCI may span over the end of the first control signal CS1 and continue at the beginning of the second control signal CS1.

According to a step 16 the radio telecommunications signal 2 comprising the identification signal IS, the first and second control signals CS1 and CS2 are transmitted, wherein the first and second control signals CS1 and CS2 comprise the downlink control signaling information DCI.

According to an embodiment step 16 comprises the transmission of user data, wherein the second control signal CS2 is not padded. Therefore, the last information field of the downlink control signaling information DCI is directly followed by the start of the user data, for example a MAC PDU.

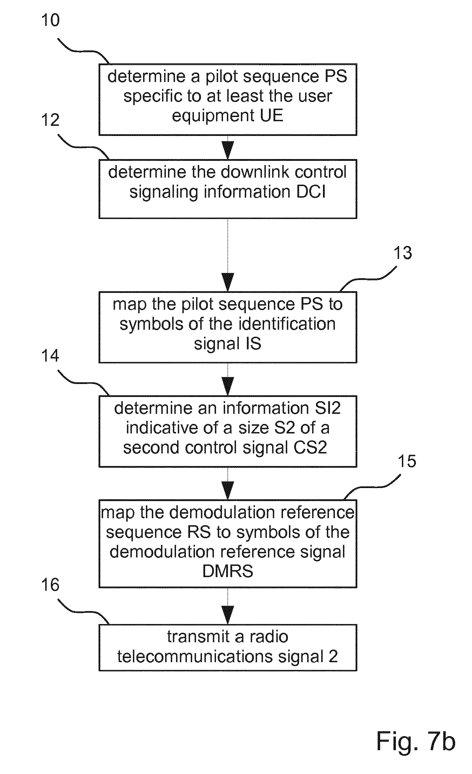

Figure 7b shows a schematic sequence diagram for operating the network node BS of figure 2. According to a step 13 the determined pilot sequence PS is mapped to symbols of the identification signal IS. This mapping may depend on the aggregation level of the first control signal CS1.

According to a step 15 the second demodulation reference sequence RS is mapped to symbols of the demodulation reference signal DMRS.

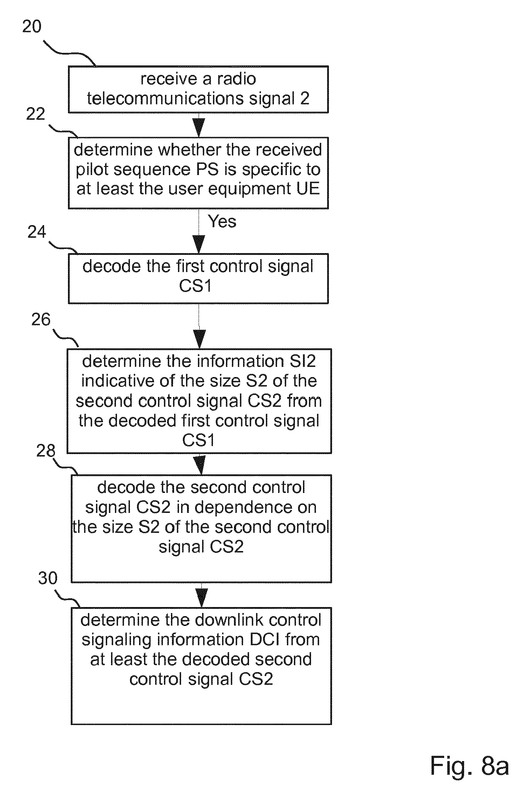

Figure 8a shows a schematic sequence diagram for operating the user equipment UE of figure 2. According to a step 20 the radio telecommunications signal 2 is received by the user equipment UE.

According to a step 22 it is determined whether the received pilot sequence PS in the radio telecommunications signal 2 is specific to the user equipment UE. If the received pilot sequence PS is not tied to the user equipment UE the procedure ends here as the downlink control signaling information DCI is intended for a further user equipment. However, to limit to the number of decoding attempts by the user equipment UE for a decoding the first and second control signal CS1 and CS2, a simple correlation mechanism can be performed in a first step to find a position of the identification signal IS and therefore the assumed position of the first control information CS1. The pilot sequence PS is blindly decoded. When the pilot sequence specific to the user equipment UE is found the position of the identification signal IS is known and consequently also the position of the corresponding first control signal CS1 is known to the user equipment UE (to the left and to the right of the identification signal IS).

Blind decoding in general requires a) a time and frequency location of the resource elements jointly carrying the FEC block, b) a modulation order (e.g. QPSK, Quadrature Phase Shift Keying, c) an information in which order the FEC encoded information bits are mapped to the resource elements, d) the size of the carried encoded information bits (net bits), and e) the FEC code used (e.g. convolutional, turbo, LDPC, Low Density Parity Check Code). Regarding this description it is proposed with respect to former requirement d) that at least the size of the second control information CS2 is variable. Moreover, also requirements a) and b) are preferably flexible with regard to the second control information CS2. Therefore, the information of the requirements a), b) and d) can be transmitted to the user equipment UE via the first control signal CS1. However, for the first control signal CS1 all requirements a) to e) are pre-configured by means of the network node BS.

Blind decoding comprises a number of trials for a successful decoding the respective data. The successful decoding of the downlink control signaling information DCI is determined when successfully terminating a CRC-check in dependence on a received CRC-field. Alternatively, the CRC-field is arranged at the end of the second control signal CS2, therefore enabling more efficient decoding at the side of the user equipment UE. The cyclic redundancy check is successful if the CRC result over CS1 and CS2 excluding the CRC-field equals the content of the CRC field after XOR-ing it with the RNTI of the user equipment UE. The latter operation removes false alarms that remained after identification signal IS detection.

A detection threshold can be defined for the correlation mechanism used by the user equipment UE. The detection threshold is selected such, that the transmitted pilot sequence PS is detected by the user equipment UE with a high probability even if it is disturbed by the air channel. The detection threshold is adjusted to achieve a low missed detection rate, typically below 1%. Simultaneously the detection threshold has to guarantee that signals similar to the pilot sequence PS are not interpreted by mistake as the pilot sequence PS, therefore achieving a low false alarm rate of e.g. 10%. Therefore by adjusting the detection threshold an effort of blind decoding of the whole radio telecommunications signal 2 can be reduced.

According to a step 24 the first control signal CS1 is decoded in dependence on the predetermined size of the first control signal CS1 and in dependence on the location of the pilot signal PS. The first control signal CS1 is suspected to reside in the adjacent resources, as a-priori known, to the identification signal IS comprising the pilot sequence PS.

The first control signal CS1 comprises the information SI2 indicating the size S2 of the second control signals CS2.

Therefore, after decoding the first control signal CS1 the position of the corresponding second control signal CS2 is known to the user equipment UE.

In step 26 the information SI2 is determined from the decoded first control signal CS1.

The first control signal CS1 is blindly decoded. This blind decoding comprises: decoding a FEC, forward error correction, block of the first control signal. It is opportunistically assumed that the first control signal CS1 is correctly decoded. The information fields mapped to the first FEC code block indicate size and location of the following FEC code block comprising at least a part of the second control signal as well as presence and length of following fields within the downlink control signaling information.

The second control signal CS2 is decoded in the following step 28, in particular in dependence on the determined size S2 of the second control signal CS.

According to a step 30 the downlink control signaling information DCI is determined from the decoded first and second control signals CS1 and CS2. A single CRC check is done over all FEC blocks of the first and second control signal CS1 and CS2 for error detection and XOR'ed with RNTI, radio network temporary identifier, for false alarm removal. If the single CRC check is successful and indicates that both the first and second control signals CS1 and CS2 are received or corrected successfully, user data (if any) is decoded as indicated by the downlink control signaling information DCI.

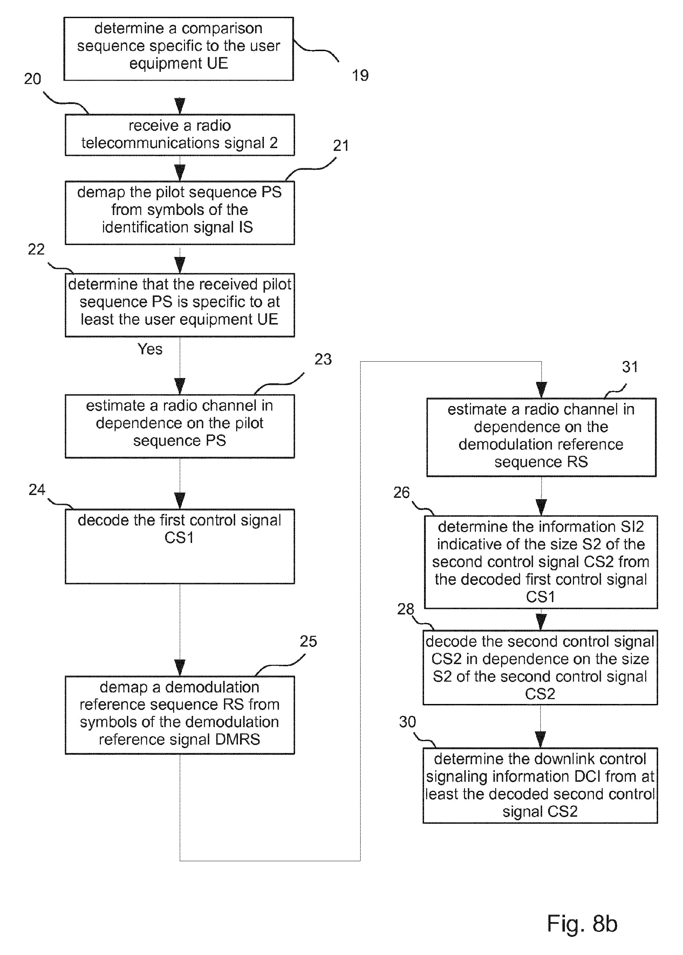

Figure 8b shows a schematic sequence diagram for operating the user equipment UE of figure 2. According to step 19 a comparison sequence specific to the user equipment UE is determined. This comparison sequence is used in step 22 by a correlator to identify the comparison sequence in the identification signals ISs received.

In a step 21 the pilot sequence PS is demapped from symbols of the identification signal IS.

In a step 23 a radio channel is estimated depending on the received pilot sequence PS. This channel estimation allows the user equipment UE to take into consideration the influence of the air channel on the reception of the first control signal CS1 which resides nearby the identification signal IS. Consequently, the decoding of the first control signal CS1 in step 24 benefits from the channel estimation and the corresponding adaption.

According to a step 25 a demodulation reference sequence RS is demapped from symbols of the demodulation reference signals DMRS. As a set of demodulation reference sequences RS is known to the user equipment, a correlator determines the existence of the demodulation reference sequence RS in the demodulation reference signal DMRS. Preferably, the downlink reference signals DMRSs residing in one single resource block RB are used to determine the demodulation reference sequence RS which in turn is used to demodulate the second control signal CS2 and user data U if present in the same resource block RB.

According to a step 31 a radio channel is estimated in dependence on the demodulation reference sequence RS received within the demodulation reference signal DMRS. This channel estimation allows the user equipment UE to take into consideration the influence of the air channel on the reception of the second control signal CS2 which resides nearby the demodulation reference signal DMRS. Consequently, the decoding of the second control signal CS2 in step 28 benefits from the channel estimation and the corresponding adaption.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figs, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A network node (BS) for operation in a radio telecommunications network (4), the network node (BS) being configured to transmit downlink control signaling information (DCI) specific to a user equipment (UE) from the network node (BS) to the user equipment (UE) according to an encoding scheme based on time and frequency radio resources, and the network node (BS) being configured to:
- determine a pilot sequence (PS) specific to at least the user equipment (UE);
- determine the downlink control signaling information (DCI);
- determine an information (SI2) indicative of a size (S2) of a second control signal (CS2); ; and
- transmit a radio telecommunications signal (2) comprising:
- an identification signal (IS) comprising the determined pilot sequence (PS);
- a first control signal (CS1) comprising the information (SI2) indicative of the size of the second control signal (CS2), wherein a size (S1) of the first control signal (CS1) is pre-determined; and
- the second control signal (CS2) comprising at least partly the downlink control signaling information (DCI).

2. A method to operate a network node (BS) in a radio telecommunications network (4) for to transmitting downlink control signaling information (DCI) specific to a user equipment (UE) from the network node (BS) to the user equipment (UE) according to an encoding scheme based on time and frequency radio resources, the method comprising:
- determining a pilot sequence (PS) specific to at least one user equipment (UE);
- determining the downlink control signaling information (DCI);
- determining an information (SI2) indicative of a size (S2) of a second control signal (CS2); and
- transmitting a radio telecommunications signal (2) comprising:
- an identification signal (IS) comprising the determined pilot sequence (PS);
- a first control signal (CS1) comprising the information (SI2) indicative of the size of the second control signal (CS2), wherein a size (S1) of the first control signal (CS1) is predetermined; and
- the second control signal (CS2) comprising at least partly the downlink control signaling information (DCI).

3. A user equipment (UE) to operate in a radio telecommunications network (4), the user equipment (UE) being configured to receive a downlink control signaling information (DCI) specific to the user equipment (UE) from a network node (BS) according to an encoding scheme based on time and frequency radio resources, the user equipment (UE) being configured to:
- receive a radio telecommunications signal (2) comprising:
- an identification signal (IS) comprising a pilot sequence (PS);
- a first control signal (CS1) comprising an information (S2) indicative of a size of the second control signal (CS2), wherein a size (S1) of the first control signal (CS1) is predetermined; and
- the second control signal (CS2) comprising at least partly the downlink control signaling information (DCI);
- determine that the received pilot sequence (PS) is specific to at least the user equipment (UE);
- decode the first control signal (CS1) in dependence on the predetermined size (S1) of the first control signal (CS1);
- determine the information (SI2) indicative of the size (S2) of the second control signal (CS2) from the decoded first control signal (CS1);
- decode the second control signal (CS2) in dependence on the size (S2) of the second control signal (CS2); and
- determine the downlink control signaling information (DCI) from at least the decoded second control signal (CS2).

4. A method to operate a user equipment (UE) in a radio telecommunications network (4) for receiving a downlink control signaling information (DCI) specific to the user equipment (UE) from a network node (BS) according to an encoding scheme based on time and frequency radio resources, the method comprising:
- receiving a radio telecommunications signal (2) comprising:
- an identification signal (IS) comprising a pilot sequence (PS);
- a first control signal (CS1) comprising an information (SI2) indicative of a size (S2) of the second control signal (CS2), wherein a size (S1) of the first control signal (CS1) is predetermined; and
- the second control signal (CS2) comprising at least partly the downlink control signaling information (DCI);
- determining that the received pilot sequence (PS) is specific to at least the user equipment (UE);
- decoding the first control signal (CS1) in dependence on the predetermined size (S1) of the first control signal (CS1);
- determining the information (SI2) indicative of the size of the second control signal (CS2) from the decoded first control signal (CS1);
- decoding the second control signal (CS2) in dependence on the size (S2) of the second control signal (CS2); and
- determining the downlink control signaling information (DCI) from at least the decoded second control signal (CS2).

5. A radio telecommunications signal (2) to transmit downlink control signaling information (DCI) specific to a user equipment (UE) from a network node (BS) to the user equipment (UE) according to an encoding scheme based on time and frequency radio resources, the signal (2) comprising:
- an identification signal (IS) comprising a pilot sequence (PS) specific to at least the user equipment (UE),
- a first control signal (CS1) comprising an information (SI2) indicative of a size (S2) of a second control signal (CS2), wherein a size (S1) of the first control signal (CS1) is known a-priori; and
- the second control signal (CS2) comprising at least partly the downlink control signaling information (DCI).

6. The network node (BS) according to claim 1 or the method according to claim 2 or the user equipment (UE) according to claim 3 or the method according to claim 4 or radio telecommunications signal (2) according to claim 5,
- wherein the pilot sequence (PS) represents a first demodulation reference signal for demodulation of the first control signal (CS1), and
- wherein the radio telecommunications signal (2) further comprises a second demodulation reference sequence for demodulation of the second control signal (CS2) and for demodulation of user data (U) if user data (U) is present.

7. The network node (BS) according to claim 1 or the method according to claim 2 or the user equipment (UE) according to claim 3 or the method according to claim 4 or radio telecommunications signal (2) according to claim 5,
- wherein the size (S2) of the second control signal (CS2) depends on the size of user data (U) being transmitted.

8. The network node (BS) according to claim 1 or the method according to claim 2 or the user equipment (UE) according to claim 3 or the method according to claim 4 or radio telecommunications signal (2) according to claim 5,
- wherein the first control signal (CS) comprises: a radio resource allocation of the second control signal (CS2) and a modulation and coding scheme information (MCS) of the second control signal (CS2).

9. The network node (BS) according to claim 1 or the method according to claim 2 or the user equipment (UE) according to claim 3 or the method according to claim 4 or radio telecommunications signal (2) according to claim 5,
- wherein the downlink control signaling information (DCI) comprises an uplink grant decision information for a transmission of uplink data in an uplink radio resource of an uplink signal (6).

10. The network node (BS) according to claim 1 or the method according to claim 2 or the user equipment (UE) according to claim 3 or the method according to claim 4 or radio telecommunications signal (2) according to claim 5,
- wherein the downlink control signaling information (DCI) comprises an assignment information for user data (U), the assignment information comprising at least a location information (c2) and an information (n) indicative of a size of user data (U).

11. The network node (BS) according to claim 1 or the method according to claim 2 or the user equipment (UE) according to claim 3 or the method according to claim 4 or radio telecommunications signal (2) according to claim 5,
- wherein the first and/or second control signal (CS1, CS2) comprises a cyclic redundancy check information (CRC) of the downlink control signaling information (DCI).
